# EUROPEAN PATENT APPLICATION

(11) **EP 1 898 236 A2**
(43) Date of publication of application: **12.03.2008**
(21) Application number: 07115776.2
(22) Date of filing: 06.09.2007
(51) Int. Cl.: G01V 5/00

(54) **Logging tool for determination of formation density**

(30) Priority: 11.09.2006 RU 2006132312
(71) Applicant: Schlumberger Holdings Limited, Tortola (VG)
(72) Inventor: Orban, Jacques, 101000, MOSCOW (RU); Nikolaevich, Iakimov Mikhail, 633011, NOVOSIBIRSKAYA OBLAST (RU)
(74) Representative: Poulin, Gérard

(57) **Abstract**

The invention relates to the area of geophysical tools used for exploration of the Earth structure, namely, to the area of gamma-ray logging tools, and can be used in analyses of the structure of geological formations around a borehole, namely, in formation density analyses.

## Description

The invention relates to the area of geophysical tools used for exploration of the Earth structure, namely, to the area of gamma-ray logging tools, and can be used in analyses of the structure of geological formations around a borehole, namely, in formation density analyses.

Borehole images can be obtained either by means of tools which are lowered into the borehole, using a wire-line, or by means of tools which are lowered into the borehole, using light-weight drill pipes.

Borehole images obtained by using electric fields are most widespread. In this case, it is possible to use different logging tools, preferably those capable of operating in water-based drilling muds. They can be moved using a wire-line (for example, SLB FMI) or a light-weight drill pipe string (for example, SLB RAB). Some dedicated logging tools allow explorers to obtain images of a borehole filled with a hydrocarbon-based drilling mud (for example, SLB OBMI).

Borehole images obtained by using ultrasonic vibrations can also be obtained by means tools which are lowered into the borehole using light-weight drill pipes (for example, ultrasonic examinations SLB A.D.N) or by means of tools which are lowered into the borehole, using a wire-line (for example, SLB UBI). It should be noted that the presence of gas in the borehole weakens greatly ultrasonic waves. It should also be noted that hydrocarbon-based drilling muds have a very strong absorbing ability. This limits the range of gap sizes between the logging tool and the borehole wall to be covered by the tool.

The density characteristic of a near-wellbore formation can be determined by using some density gamma-ray logging tools which are lowered into the borehole, using light-weight drill pipes (for example, LWD A.D.N.) The source of gamma rays and the detectors in this tool are displaced from the center of the tool to its periphery. The density measurement is strongly focused in azimuth. When the tool rotates during the drilling process, the density measurement scans the whole circumference of the borehole. In case of correct synchronization of the readings with the angular coordinate, it is possible to obtain a map of formation densities measured in azimuth and in depth. This allows explorers to obtain a borehole density image. The resolution of this image is limited in space.

The applicant knows no gamma-ray logging tools dedicated to determination of the density of near-wellbore formations.

There is a known device (SU, Inventor's Certificate 1364704) used for controlling the quality of the cementing of larger-diameter casing pipes. The known device consists of the body, measuring units rotating coaxially with respect to the body, a block of electric coupling between the measuring units, and a mechanism for rotating the units.

The disadvantage of the known device consists in low accuracy of measurements.

There is also a known gamma-ray logging device (RU, Patent 2073896) which is used for slant and horizontal boreholes and which includes a gamma-ray absorbing screen which is capable of rotating freely on its axis and which contains a gamma-ray source enclosed in a container and gamma-ray detectors enclosed in a hermetically sealed shell, as well as unidirectional collimation channels made in the gamma-ray absorbing screen opposite the gamma-ray source and detectors. The gamma-ray absorbing screen is made asymmetric and its center of gravity is shifted towards the collimation channels of the gamma-ray source and gamma-ray detector.

The disadvantage of the known device consists in low accuracy of the results obtained during the characterization of the condition of the near-wellbore formations.

The following gamma-ray logging device (SU, Inventor's Certificate 1653437) can be regarded as the closest analogue of the invention claimed. The known device consists of the hermetically sealed cylindrical body inside which a gamma-ray source and gamma-ray detectors are located. A gamma-ray absorbing screen is mounted on the body and contains unidirectional collimation channels of the gamma-ray source and gamma-ray detectors. In addition, the device contains a pressure system. The gamma-ray absorbing screen is mounted on the body in such a way as to allow free axial rotation of the body and of the screen with respect to each other. The pressure system is installed on the screen from the side opposite to the collimation channels of the gamma-ray source and gamma-ray detectors. The gamma-ray source and gamma-ray detectors are mounted on the cylindrical body in such a way as to allow 4n geometry.

The disadvantage of the known device is that the known device cannot be used for obtaining information about the density of a near-wellbore formation.

The technical problem to be solved through the proposed technical solution consists in the development of gamma-ray logging tools which can be used for obtaining information about near-wellbore formations.

The technical result to be obtained through the implementation of the proposed technical solution consists in the fact that it allows explorers to obtain information about the structure of geological formations around a borehole.

To achieve the said technical result in accordance with the first of the embodiments, it is proposed to use a formation density logging tool consisting of the body along the vertical axis of which a gamma-ray source container and at least one reflected gamma-ray detector are installed. The body is made in such a way as to allow placement of the gamma-ray source container in the center of the borehole, and contains an annular slot permeable to gamma rays. This embodiment of the proposed device provides for central arrangement of the gamma-ray source, on the one hand, and uniform distribution of gamma rays through the annular slot, on the other hand. The central arrangement of the gamma-ray source can be achieved by using different methods. For instance, a ring made of an elastic deformable material (preferably, polypropylene or polystyrene) can be additionally installed on the body of the tool. The diameter of the ring is equal to that of the borehole pipe, and the body is equally spaced from all points of the ring. The ring slides along the internal surface of the borehole under the weight of the body made of a heavy metal (tungsten, lead). The body connected to the ring with radially arranged rods made of the same polymer is always located practically on the vertical axis of the borehole. Small deformation of the borehole results in the corresponding deformation of the ring, while the body of the tool still remains practically on the vertical axis of the borehole. Similarly, the body will also be located on the vertical axis of the borehole in case that rods oriented radially with respect to the vertical axis of the body will additionally be fixed on the body of the tool. The said rods are made of an elastic deformable material, and the diameter of the circumference passing through the ends of the rods located in the same plane perpendicular to the said vertical axis of the body is equal to the diameter of the borehole pipe. The principle of the centering action of the said rods is almost identical with the action of the ring. It is possible to use other devices to center the body.

The annular slot in the body can be made in the form of a strip made of a material permeable to gamma rays (e.g. aluminum, zinc, polymer) and fixed in the body, as well as in the form of free space in the body where elements connecting the upper and lower parts of the body are located. The strip can be fixed in the body by using any known method. Gamma rays will pass practically unchecked through the said annular slot. In case that a strip made of a polymer or of metal reacting with the borehole fluid is used, it is desirable that the annular slot should be additionally covered from the outside with a strip made of a material which is permeable to gamma rays and is inert to the action of the borehole fluid. It is desirable that the body should be vacuumized in order to reduce the gamma-ray scattering and absorption inside the body. The body can additionally be placed into a case made of a material permeable to gamma rays, in order to protect the annularly slotted body against the action of the borehole fluid without losing the gamma-ray energy.

The said technical result can also be achieved in case of using a formation density logging tool consisting of the body in which a gamma-ray source container and at least one reflected gamma-ray detector are installed. The gamma-ray source is made focused and is installed on a rotating head. In this embodiment, homogeneous distribution of gamma rays in the direction radial to the formation is achieved by using a rotating focused radiation source located in the borehole. After the rotating radiation source has made one full turn at a constant speed, the distribution of energy becomes homogeneous for all azimuths. To achieve high intensity of radiation and to use more efficiently radiation receivers, it is possible to use several radiation sources installed on the rotating head at different azimuths. It is possible to propose several rotating head designs, such as: the container where the radiation source and the focusing screen are located rotates on its axis which coincides with the axis of the borehole; the container with the radiation source and with the screen inhibiting the radiation in the axial direction is located in the center of the tool which is located in the center of the borehole. A hollow cylinder equipped with wings rotates around the container where the radiation source is located. This rotating device (and its wings) is made of heavy materials and has an orifice to allow the focused passage of gamma rays. These orifices pass through the wings and gamma rays can therefore pass to the formation at minimum abatement. These wings allow recirculation of the fluid contained in the borehole while the logging tool moves in the borehole. The container can also be located eccentrically with respect to the axis of rotation and can rotate in such a way that its center is kept at the same distance from the axis of rotation (which usually coincides with the axis of the borehole). Or the container can be located eccentrically with respect to the axis of rotation and can rotate in such a way that its external surface is kept at a small distance from the formation (the radius of rotation is adapted to the geometry of the borehole). Besides, it can rotate in such a way that its external surface is opposite the formation. In the preferable embodiment of the tool, the detectors are aligned with respect to the gamma-ray source in azimuthal directions. It is preferable to use detectors with an azimuthal angle of ± 25. In the most preferable embodiment of the tool, the container contains more than one gamma-ray outlet window.

The above-mentioned technical result can also be achieved by using a formation density logging tool consisting of the body in which a gamma-ray source container and at least one reflected gamma-ray detector are installed. The gamma-ray source is made annular and is located around the body. This embodiment of the tool will also provide uniform distribution of gamma rays around the surface of the borehole. In one of the embodiments of the tool, the gamma-ray source can be fixed in an annular groove on the external surface of the body. In this case, it is desirable that the gamma-ray source should be covered from the outside with a layer of a material permeable to gamma rays. The annular gamma-ray source can also be located inside the vacuumized body. The said body is made of three layers. The inner layer is made of a material that interacts with charged particles, the second layer is made of high-density materials and contains an annular slot to allow the passage of gamma rays, and the outer layer is a thin wall made of a strong material resistant to the action of the borehole fluid. This embodiment has the following advantages:
- Minimum losses of primary radioactive radiation in the tool.
- There is a high possibility that primary radioactive radiation will reach the layer which is located on the periphery of the vacuum chamber and in which gamma quanta are formed.
- Gamma rays formed in this layer are focused on the formation, using conventional screening. Gamma quanta which spread to the periphery of the tool pass through the annular slot in the screen and then spread towards the formation. With the tool proposed, the possibility of generation of gamma rays directed outwards is three times higher than with the conventional focusing method which is used in conventional density-measuring tools.
- Radiation coming out of the tool has almost homogeneous density of distribution.
- The density of distribution of gamma quanta passing through the slot can be changed by adjusting the deflecting field inside the vacuum chamber. This can be useful in producing a rotating gamma ray, as well as in spreading the gamma rays coming out of the tool in a required direction. In all its embodiments, the tool may additionally contain a magnetic system or an electric system installed in such a way as to allow the gamma-ray focusing on the formation.

The particle path can be curved by using an electric field. In the simplest design, a high-intensity electric field is created between the nuclear particle source and the cylindrical wall of the vacuum chamber so that the charged particles could be attracted by the cylindrical wall of the vacuum chamber (near the slot). In an improved design, a deflecting field is created between a thin wire that coincides with the axis of the tool and is fixed between two flat faces of the vacuum chamber. In this case, electric filed lines are located in such a way that the charged particles which previously spread towards the flat faces of the chamber will deflect greater than the charged particles which spread towards the cylindrical wall of the chamber. It is possible to add annular electrodes which will be located axially near the surface of the flat faces of the vacuum chamber and will ensure that the charged particle path is optimally curved towards the cylindrical wall of the vacuum chamber.

The charged particle path can also be curved by using a magnetic field. The particle path curving is described by the known electromagnetic law: the force that impacts the particle is equal to the vector product of the magnetic field intensity by the particle speed, multiplied by the particle charge. This means that the particle path curves due to a force directed perpendicularly to the plane in which the magnetic field intensity vector and the particle speed vector lie. When implementing the above design of the tool, it is desirable to create a magnetic field directed perpendicularly to the azimuthal plane. In theory, the particle must move in a circle. The particle path can be approximated by the sequence of chords. It should also be noted that the directions of magnetic fluxes near the upper and the lower faces of the vacuum chamber must be mutually opposite, and the magnetic force that impacts the particle in the plane located in the middle between two flat faces of the chamber must be equal to zero. In other words, the value of the magnetic flux must depend on the Z coordinate and must increase as it approaches the flat faces of the chamber, thus ensuring that the particles rotate in opposite directions on either side of the plane located in the middle between two flat faces of the chamber.

The gamma-ray source is located in the point having the following coordinates: Z = 0 / R = 0 (R and α are cylindrical coordinates in the plane being perpendicular to the tool/borehole axis). With this configuration of the magnetic field, the following force will impact the charged particles:
- When the particles move quickly in the horizontal plane (Z=0), there is no force. The particles continue to move radially towards the slot.
- When the particles spread towards the flat faces of the vacuum chamber at the γ angle to the Z axis, they acquire acceleration in the radial direction and their path curves in the radius/Z axis plane. The γ angle increases so much that a particle can cross the radiation source/slot plane and start moving toward the opposite flat face of the vacuum chamber in the oppositely directed field. In this case, the particle path curves in the opposite direction. This means that the particle moves to the slot through a changing path.

The amplitude of the annular field is optimized with respect to the coordinates (Z,R):
- For each R value, the magnetic flux is maximum near the flat faces of the vacuum chamber (Z coordinate corresponding to the flat face of the chamber) and is equal to zero at Z=0.
- For each R value (Z value is constant), the magnetic flux is mathematically optimized to minimize changes in the path of the particle that moves towards the slot.
- The magnetic flux is symmetric with respect to the Z=0 plane.

An annular magnetic field can be produced by letting electric current pass in the flat faces of the chamber in the radial direction. It is practically implemented by winding a wire on a toroidal core made of a non-ferromagnetic material. The toroidal core must be sufficiently thick to provide a great distance between two "flat" surfaces of the wire. Each radially directed wire generates an annular magnetic field that decreases by the 1/L law where "L" is the distance from this point to the wire. Owing to the aggregate of sets of radially located wires, the magnetic field lines form an almost continuous circle. When the proposed toroidal core is used, the density of the radial magnetic flux decreases with the increasing R value (R is the distance from the center of the tool). So, the magnetic field decreases with the increasing R distance. Toroidal coils are located near two flat faces of the vacuum chamber. The superposition of the field in the chamber meets the following requirements:
- For any R value, the magnetic flux = 0 at Z = 0 (in the radiation source/slot plane)
- For any R value, the magnetic flux (R, Z of the flat face of the chamber) = the maximum flux (R, the flat face of the chamber)
- On the Z plane, the magnetic flux (R, Z coordinate of the flat face of the chamber) = the magnetic flux (0, the flat face of the chamber) / R
- At the point (R,Z), the magnetic flux = the magnetic flux (0, Z coordinate of the cylindrical surface of the chamber) / R {1/(Z coordinate of the flat face of the chamber - R) - 1/(Z coordinate of the flat face of the chamber + R)}. If particles deflect insufficiently or enter the toroidal coil, it means that they are influenced by a strong magnetic flux, which results in the return of the particles to the central part of the system (which is located outside the coil). It is very important that the coil should be as light as possible and should have a minimum cross section to prevent the absorption of the particles by the material of the coil. The core of the coil is vacuum, which eliminates the problem of absorption of the particles.

More complicated designs of the toroidal coils may provide for a required distribution of the magnetic flux density in the radial direction in the plane of the winding. This allows explorers to control the distribution of the magnetic flux with respect to the R coordinate. This can be used for optimizing the output of the particle flux on the annular target and on the slot.

It is desirable that the magnetic fields created by two toroidal coils should be symmetric. In theory, the current in the windings should be equal in the system having regular geometry and homogeneous properties of the material. In practice, it is sometimes necessary to adjust the current in the windings in order to equalize the fields. It is also desirable that electric power should be transferred from the one side to the other side around the radius of the vacuum chamber in such a way as to allow mutual neutralization of the magnetic fields created by the current in the lead wires (ingoing and outgoing currents). In case there is no such mutual neutralization of the magnetic fields, the charged particles will acquire circular acceleration, which is undesirable for operation of this device. Ideally, a coaxial cable passing along the axis of the tool should be used. But since the radiation source is located in the center of the body, a certain compromise may be required. For example, it is possible to lay a coaxial cable on the periphery of the vacuum chamber, under the assumption that the magnetic flux in this area is close to zero. It is possible to achieve a certain improvement by laying several coaxial cables spaced at equal angular distances from each other, along the periphery of the vacuum chamber. It should also be noted that the toroidal coils should be thick enough in order to limit the influence of the wires on the far face (the reverse side) of the toroidal coil. The toroidal core of the coil must itself contain a screening material in order to eliminate the influence of these wires. This screening material must only fill a part of the cross section of the toroidal core.

According to the third embodiment of the proposed tool, it is necessary to use a deflecting field in case that secondary emission of gamma rays is used.

For this purpose, it is desirable to ensure that the deflection of the beam of particles in the vacuum chamber is not constant (nor homogeneous) and allows the beam of particles to move in a circle. In case that such a rotating beam of particles is available, the flux of gamma quanta outside the tool will also be of the rotating type. It is possible to use multipole emitters (quadrupole emission of gamma rays) to optimize the application of this method.

When an electrostatic deflecting system is used, a quasi-rotating beam of particles can be produced by separating the annular electrode into several segments. The electric deflecting system supplies the voltage for the purpose of creating a deflecting electric field on the certain segments of the annular electrode so that charged particles could be attracted to this electrode. If the voltage is supplied alternately to sequentially located segments, a quasi-rotating radial beam of charged particles is produced. It should be noted that excitation with reversed polarity can be supplied to the segments not currently in use, in order to deflect the charged particles from them.

When a magnetic deflecting system is used, a radial rotating beam of charged particles can be produced by using an axially directed magnetic field. This field will deflect the path of charged particles in the focusing slot plane. This deflection will prevent (or at least weaken) the flux of the particles hitting the annular target in this zone. A radial rotating beam of charged particles can be produced by supplying excitation to several coils located on the periphery of the vacuum chamber (the axes of these coils must be parallel to the axis of the tool). In this case, it is preferable to use a symmetric deflecting system which can be implemented by using U-shaped electromagnets located in the upper and lower parts of the radiation source chamber. It should be noted that it is necessary to use several U-shaped electromagnets in order to produce a radial rotating beam of charged particles. The U-shaped electromagnets must not join in their centers to produce a required magnetic flux on the pole piece of the magnet.

Usually, several detectors spaced at different distances from the gamma-ray source are used for obtaining images. This allows acceleration of the image-obtaining process due to a greater azimuthal overlap. Sets of detectors can be installed either inside the body of the tool or on pads which are pressed to the rock.

The following types of detectors can be used:
- a scintillation crystal with a photomultiplier
- a Geiger counter
- other miniature detectors which are sensitive to nuclear radiation. In case that a set of detectors located inside the body of the tool is used, the detectors are installed in different azimuthal positions in the same plane of the tool. The azimuthal resolution of the image can be limited due to:

- the use of a limited number of detectors as the circumference of the tool is relatively small;
- the fact that the angular resolution is reduced due to the scattering of returning gamma quanta in the drilling mud.

This design is simpler as the whole measuring system is located inside the body of the tool. But in this case, the measurement speed can be limited due to a small number of gamma quanta returning to the tool. In order to weaken absorption when gamma quanta are returning to the tool, it is possible to use a drilling mud remover.

The same drilling mud remover can be equipped with wings made of heavy materials which increase the azimuthal resolution due to decreased scattering in the drilling mud remover itself.

To reduce the impact of the drilling mud on the number of returning gamma quanta, the detectors can installed in pads which are pressed to the walls of the borehole. The design where pads (with sets of detectors installed therein) are used is similar to the design which is used in tools for obtaining a borehole image, based on electrical measurements (for example, Schlumberger FMI or OBMI logging tools).

In tools having this design, the detectors and/or the associated electronics can be installed in a chamber which is located in the pad and in which atmospheric pressure or pressure equal to the borehole pressure can be maintained.

In tools for obtaining a density image, it is possible to use rotating detectors. This design provides especially good results in case that a rotating radiation source is also used. It is also possible to use a design according to which the tool has a section where a focused radiation source and detectors (similar to those used in the conventional wire-line logging tool) are located. This section rotates and, consequently, the tool passes around the full circumference of the borehole. The process of obtaining an image in this tool is similar to the process used in a Schlumberger LWD tool for obtaining a density image.

It is known that the borehole walls are usually covered with a mud cake resulting from a drilling mud. This mud cake often contains elements which have a strong influence on the gamma-ray absorption and scattering. For example, barite and some salts can influence the results of measurements. It is desirable that at least two detectors installed at different distances (i.e. at a small distance and at a great distance) from the radiation source should be used for compensation for such losses of gamma rays. In this case, the influence of the mud cake is compensated for due to the fact that gamma rays which come to one of the detectors must pass though the mud cake twice, and their ability to pass through the formation depends on the distance between the source and the detector. The low-energy component will therefore be greater on a gamma-quantum energy distribution histogram obtained by using a detector located at a greater distance from the radiation source, than on a histogram obtained by using a detector located at a shorter distance from the radiation source, because the length of the gamma-ray path through the formation will be greater in the first case as compared with the second case. Using calibration, it is possible to eliminate (or to reduce considerably) the influence of the wall mud cake on the tool having the above-mentioned design that contains at least two detectors installed at different distances from the source.

It has been experimentally established that the amplitude of the middle part of the histogram characterizing the number of events (registration of reflected gamma quanta) versus their energy outside the body of the tool, which energy corresponds to medium energies (approximately 200 to 600 keV), depends greatly on the density of the environment (i.e. the formation): the greater the density of the environment, the lesser the integral amplitude of the histogram in this part. It is therefore desirable to use the device (the logging tool) whose design provides initial gamma-quantum energy varying from 200 to 600 keV outside the body due to selection of a proper gamma-ray source and/or due to abatement of energy by the material of the slot.

The relationship between the integral amplitude of the histogram part that corresponds to low energies (about 100 keV) and the integral amplitude of the histogram part that corresponds to medium energies allows evaluation of the lithology and of the mineral composition of the formation, based on empirical data and numerical simulation.

The operation of the proposed tool is similar to the operation of the known gamma-ray logging tool.

The application of the proposed tool allows explorers to obtain information about the structure of geological formations around the borehole.

## Claims

1. Logging tool used for determination of formation density and consisting of a body in which a gamma-ray source container and at least one reflected gamma-ray detector are installed, said logging tool is **characterized in that** the body is made in such a way as to allow placement of the gamma-ray source container in the center of the borehole, and that the body contains an annular slot permeable to gamma rays.

2. Tool according to claim 1, **characterized in that** a ring made of an elastic deformable material is additionally installed on the body of the tool, the diameter of the ring is equal to that of the borehole pipe, and the body is equally spaced from all points of the ring.

3. Tool according to claim 1, **characterized in that** rods oriented radially with respect to the vertical axis of the body will additionally be installed on the body of the tool, the said rods are made of an elastic deformable material, and the diameter of the circumference passing through the ends of the rods located in the same plane perpendicular to the said vertical axis of the body is equal to the diameter of the borehole pipe.

4. Tool according to claim 1, **characterized in that** the annular slot is made in the form of a strip made of a material permeable to gamma rays and fixed in the body.

5. Tool according to claim 1, **characterized in that** the annular slot is made in the form of free space in the body where elements connecting the upper and the lower parts of the body are located.

6. Tool according to claim 1, **characterized in that** the annular slot is additionally covered from the outside with a strip made of a material permeable to gamma rays.

7. Tool according to claim 1, **characterized in that** the body is vacuumized.

8. Tool according to claim 1, **characterized in that** the body is additionally placed into a case made of a material permeable to gamma rays.

9. Logging tool used for determination of formation density and consisting of a body in which a gamma-ray source container and at least one reflected gamma-ray detector are installed, said logging tool is **characterized in that** the gamma-ray source is made focused and is installed on a rotating head.

10. Tool according to claim 9,
**characterized in that** the tool additionally contains at least one focused gamma-ray source located in the said container, wherein all additional sources are installed on the same rotating head and are oriented at different azimuths.

11. Tool according to claim 9; **characterized in that** the tool additionally contains a symmetric focusing screen, the gamma-ray source container and the focusing screen are made capable of rotating on their own vertical axes.

12. Tool according to claim 11, **characterized in that** the vertical axis of the container coincides with the vertical axis of the body.

13. Tool according to claim 9, **characterized in that** the tool additionally contains a hollow cylinder which has wings and at least one orifice to allow the passage of gamma rays, the cylinder is made capable of rotating around the container and is located around the gamma-ray source container, the cylinder and the wings are made of a material that inhibits gamma rays.

14. Tool according to claim 13, **characterized in that** orifices are additionally made in the wings to allow the passage of gamma rays.

15. Tool according to claim 9, **characterized in that** the container is installed eccentrically with respect to the axis of rotation of the body so that the center of the container could move in a circle around the axis of the borehole during the rotation.

16. Tool according to claim 9, **characterized in that** the container is installed eccentrically with respect to the axis of rotation of the body so that the center of the container could pass at a constant distance from the formation.

17. Tool according to claim 9, **characterized in that** the detectors are aligned with respect to the gamma-ray source in azimuthal directions.

18. Tool according to claim 17, **characterized in that** detectors with an azimuthal angle of ± 25 are used.

19. Tool according to claim 9, **characterized in that** the container contains more than one gamma-ray outlet window.

20. Logging tool used for determination of formation density and consisting of a body in which a gamma-ray source container and at least one reflected gamma-ray detector are installed, said logging tool is **characterized in that** the gamma-ray source is made annular and is located around the body.

21. Tool according to claim 20, **characterized in that** the annular gamma-ray source is fixed in an annular groove on the external surface of the body.

22. Tool according to claim 20, **characterized in that** the annular gamma-ray source is covered from the outside with a layer of a material permeable to gamma rays.

23. Tool according to claim 20, **characterized in that** the annular gamma-ray source is located inside the vacuumized body made of three layers, the inner layer is made of a material that interacts with charged particles, the second layer is made of high-density materials and contains an annular slot to allow the passage of gamma rays, and the outer layer is a thin wall made of a strong material resistant to the action of the borehole fluid.

24. Tool according to claim 20, **characterized in that** the tool additionally contains a magnetic system or an electric system installed in such a way as to allow the gamma-ray focusing on the formation.
